# EUROPÄISCHE PATENTSCHRIFT

(11) **EP 1 586 924 B1**
(45) Veröffentlichungstag und Bekanntmachung des Hinweises auf die Patenterteilung: **29.08.2007**
(21) Anmeldenummer: 05007841.9
(22) Anmeldetag: 09.04.2005
(51) Int. Cl.: G02B 7/00, G02B 6/38, G02B 6/42, G12B 5/00, B23Q 3/06

(54) **Justageplattform**
Adjustable platform
Plateforme ajustable

(30) Priorität: 15.04.2004 DE 102004018228
(43) Veröffentlichungstag der Anmeldung: 19.10.2005
(73) Patentinhaber: Forschungszentrum Karlsruhe GmbH, 76133 Karlsruhe (DE)
(72) Erfinder: Stratmanns, Erwin, 76706 Dettenheim (DE); Sauter, Hatto, 76872 Freckenfeld (DE); Lang, Karlheinz, 76351 Linkenheim-Hochstetten (DE)
(74) Vertreter: Rückert, Friedrich

(56) Entgegenhaltungen:
- DE-A1- 4 041 870
- DE-T2- 69 905 758
- US-A- 6 089 525
- US-A1- 2002 163 741
- US-B1- 6 262 853

## Beschreibung

Die Erfindung betrifft eine Justageplattform mit einem in je drei Richtungen schwenkbaren und verschiebbaren (d. h. insgesamt sechs Freiheitsgrade) Verstelltisch gemäß des ersten Patentanspruchs.

Justageplattformen sind hochpräzise Positioniertische, ausgestattet mit rotierenden und/oder linearen Einzelverstellmöglichkeiten zur exakten Positionierung und Ausrichtung von Gegenständen je nach Anwendung mit einer Genauigkeit unter einem Mikrometer. Die Auswahl der einstellbaren Freiheitsgrade sowie die erforderliche Verstellgenauigkeit richten sich nach den jeweilig zugrunde liegenden Anwendungen. Typische Anwendungen liegen im Bereich der Mikrosystemtechnik, der hochpräzisen Messtechnik oder in optischen Systemen wie der Lichtleitfaserleittechnik oder der Mikroskopie. Die Verstellgenauigkeiten liegen dabei im einstelligen Mikrometerbereich oder deutlich darunter, d. h. sie unterscheiden sich beispielsweise signifikant von typischen Positionierungsvorrichtungen Verfahrtischen oder Gelenken aus den Bereichen der Medizintechnik, des Werkzeugmaschinenbaus oder der Robotik.

In der DE 36 15 128 A1 wird beispielhaft ein Verstelltisch zur Justierung in einem Freiheitsgrad offenbart. Verstelltische wie dieser weisen typischerweise Linear-, alternativ auch Schwenkführungen auf, die entweder durch eine manuelle Feinverstellung oder Linearantriebe wie Piezoelektrische Antriebe oder Aktoren gegen eine Federkraft wirkend in eben diesem Freiheitsgrad verstellbar sind. Grundsätzlich sind die Verstellmöglichkeiten durch ein einfaches Hintereinanderschalten, d.h. Übereinanderstapeln mehrerer dieser Verstelltische auf mehrere Freiheitsgrade erweiterbar.

Derartigen Justiervorrichtungen sind grundsätzlich auch über Mikrometerschrauben im Mikrometerbereich einstellbar und zeichnen sich durch ihren großen Verstellbereich aus. Die Schlittenführung erfolgt aber nicht reibungsfrei auf Gleitschienen oder anderen Lagerungen, d. h. auch bei sehr niedriger Reibung ist mit einer wechselnden Reibwiderständen (Haftreibung und Gleitreibung bzw. Rollreibung) zu rechnen. Folglich müssen bei derartigen Verstelltischen auch mit Hystereseeffekten, ruckbehafteten Anfahren einer Verstellung sowie Setzungseffekten, die eine Justierung durch einen später, aber meist spontan einsetzenden Abbau von Haftreibungskräften durchaus verstellen kann, als Fehlerquelle gerechnet werden. Derartige Fehlerquellen sind jedoch insbesondere für Justiervorrichtungen für optische Systeme, bei denen zudem ein großer Verstellbereich meist nicht erforderlich ist, nicht tolerierbar.

DE 38 27 960 A1 offenbart dagegen eine Justiervorrichtung mit einem federnd aufgehängten Schlitten. Der Schlitten wird allein durch jeweils paarweise gegeneinander wirkende Federelemente (Blattfedern) ohne zusätzliche Schienen oder Bahnen geführt und durch zwei Stellvorrichtungen in Position gebracht. Die Vorrichtung eignet sich für Verstellungen in zwei Freiheitsgraden (X/Y-Verstellungen).

Dagegen wird in der DE 40 41 870 A1 eine Justiervorrichtung für optische Systeme mit einer federnd aufgehängten Trägerplatte (Schlitten) offenbart, die sich für Justierungen in allen sechs Freiheitsgraden eignet. Die Trägerplatte ist mit drei Federelementen, vorzugsweise in Ruheposition parallel zueinander ausgerichtete quadratische Stabfedern frei in einem Rahmen aufgehängt und wird mit üblichen Stellantrieben (u. A. gegeneinander wirkende Stellschrauben) positioniert.

Ferner wird in den US 2002/163741 A1 und DE 699 05 758 T2 je eine Justageplattform mit einem in um drei Achsen schwenkbaren und in drei Richtungen verschiebbaren Verstelltisch, umfassend ein Basiselement, Federelemente, die zwischen Verstelltisch und Basiselement kreisförmig um einen Symmetriepunkt angeordnet und zu diesem gleich ausgerichtet sind, wobei die Federelemente in allen Richtungen eine elastische Nachgiebigkeit aufwiesen sowie Verstellvorrichtungen, die vom Basiselement aus mechanisch auf den Verstelltisch einwirken, beschrieben.

Zur Reduzierung von übermäßiger Zugbelastung der Stabfedern aufgrund der konstruktiv bedingter geometrischen Längenänderungen bei Schwenkbewegungen musste die rahmenseitige Aufhängung einer Stabfeder als Blattfeder gestaltet werden. Ebenso sind nicht alle Freiheitsgrade ohne größeren Aufwand separat einstellbar, d.h. die überwiegende Anzahl der Stellantriebe greifen in die Verstellung mehrerer Freiheitsgrade ein. Zudem reagieren viele der bekannten Justiervorrichtungen aufgrund der integrierten Präzisionsführungen und -bauteile besonders sensibel auf Verschmutzungen und/oder auf mechanische Belastungen, welche beispielsweise bei der Montage von Komponenten auf der Justierführung stattfinden.

Davon ausgehend ist es Aufgabe der Erfindung, eine Justierplattform vorzuschlagen, welche die genannten Nachteile nicht aufweist und sich insbesondere für die Justierung von optischen Bauteilen ausreichende Genauigkeit und Langzeitstabilität, gleichzeitig aber auch für einen Versuchsbetrieb mit häufigen Rüstzeiten erforderliche Robustheit aufweist.

Die Aufgabe wird durch eine Justierplattform mit den Merkmalen von Anspruch 1 gelöst. Vorteilhafte Ausgestaltungen dieser Justierplattform werden in den Unteransprüchen wiedergegeben.

Erfindungsgemäß wird eine Justiervorrichtung mit einem in um drei Achsen schwenkbaren und in drei Richtungen verschiebbaren Verstelltisch, d.h. für sechs Freiheitsgrade (3x lateral, 3x rotation) vorgeschlagen, bei der ein Verstelltisch über gegeneinander vorgespannte Federelemente ohne Festkörperreibung mit einem Basiselement verbunden ist. Auf dem Verstelltisch wird ein Symmetriepunkt definiert, durch den die Schwenkachsen der drei Rotationsfreiheitsgrade verlaufen. Vorzugsweise fällt der Symmetriepunkt mit dem Mittelpunkt des Verstelltisches zusammen. Das Basiselement selbst dient als Träger der Justiervorrichtung.

Vorzugsweise weisen die drei Achsen, welche ortsfest im Verstelltisch durch den Symmetriepunkt verlaufen, als X-, Y-, und Z-Achsen in die vorgenannten drei Richtungen für die lateralen Freiheitsgrade. Dabei bietet es sich an, diese drei Achsen orthogonal zueinander auszurichten.

Die Federelemente sind so konzipiert und positioniert, dass sie den Verstelltisch ohne äußere Krafteinwirkung in einer definierten Position halten und die Federwirkung zwischen Verstelltisch und Basiselement in allen Richtungen eine Federkraftcharakteristik im gleichen Größenbereich aufweist. Dies wird dadurch erreicht, dass die einzelnen Federelemente keine erheblich überhöhte Zug- oder Biegesteifigkeiten in bestimmten Richtungen (beispielsweise bei geraden stab- oder streifenförmige Federelementen in Zugrichtung), d.h. in allen Ausschlagsrichtungen eine elastische Nachgiebigkeit, d.h. eine Mindestnachgiebigkeit aufweisen.

Die Federelemente sind zwischen Verstelltisch und Basiselement kreisförmig und um den Symmetriepunkt symmetrisch zueinander angeordnet, d.h. auch zu diesem gleich ausgerichtet. Vorzugsweise sind alle Federelemente identisch und gleich wirkend, vorzugsweise zur Vermeidung von Übergangsunstetigkeiten aber auch gegeneinander vorgespannt.

Am Basiselement sind zudem Verstellvorrichtungen vorgesehen, die mechanisch auf den Verstelltisch einwirken, bevorzugt an jeweils zwei Krafteinleitungspunkten in Bereichen nahe und in Richtung der X- und Y-Achse, weiterhin bevorzugt jeweils unidirektional und parallel zu den drei Achsen. Die Verstellvorrichtungen sind so konzipiert und positioniert, dass sich alle Freiheitsgrade in vorteilhafter Weise separat und ohne zusätzliche Korrekturverstellungen für die restlichen Freiheitsgrade justieren lassen. Es bietet sich an, die Krafteinleitungspunkte auf den Achsen punktsymmetrisch zum Symmetriepunkt anzuordnen.

Als Federelemente eignen sich besonders sternförmig um den Symmetriepunkt angeordnete gebogene Rundstäbe aus einem elastischen Material, vorzugsweise Federstahl, deren Dimensionierung und Biegung nach der äußeren Krafteinwirkung ausgelegt sind. Als Verstellelemente eigenen sich grundsätzlich alle linearen Präzisionsverstellelemente, beispielsweise Mikrometerschrauben, Linearantriebe oder auch Kugeldruckschrauben mit Feingewinde.

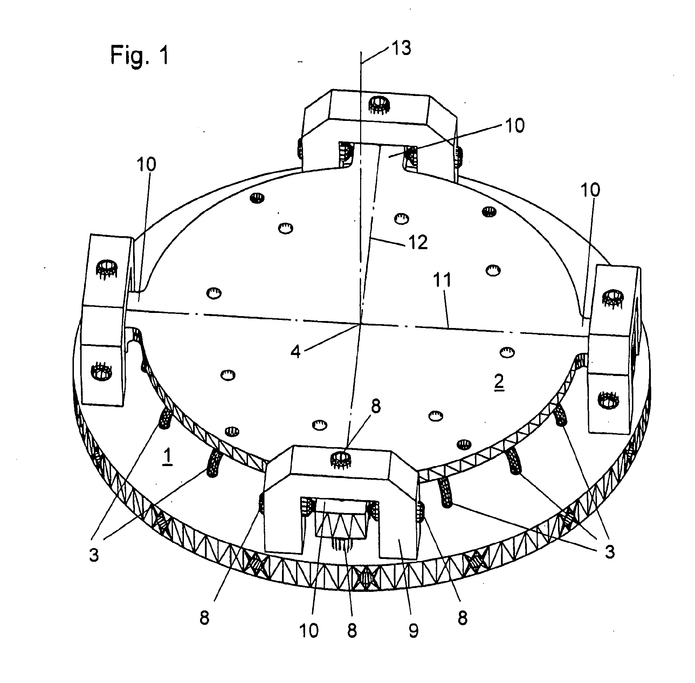

Die Erfindung wird beispielhaft anhand eines Ausführungsbeispiels mit den folgenden Figuren beschrieben. Es zeigen
Fig. 1 die Justageplattform in perspektivischer Ansicht sowie
Fig. 2 die Justageplattform in seitlicher Teilschnittdarstellung.

Die dargestellte Justierplattform umfasst ein Basiselement 1, ein Verstelltisch 2 sowie eine Anzahl von C-förmig vorgespannten Federelementen 3, in der zuvor beschrieben Weise kreisförmig um den Symmetriepunkt 4 angeordnet. Unter den Verstelltisch ist eine Adapterplatte 5 zur Befestigung der Federelemente 3 angeflanscht. Die drei Achsen sind als X-Achse 11, Y-Achse 12 und Z-Achse 13 orthogonal zueinander und durch den Symmetriepunkt 4 verlaufend ortsfest im Verstelltisch angeordnet.

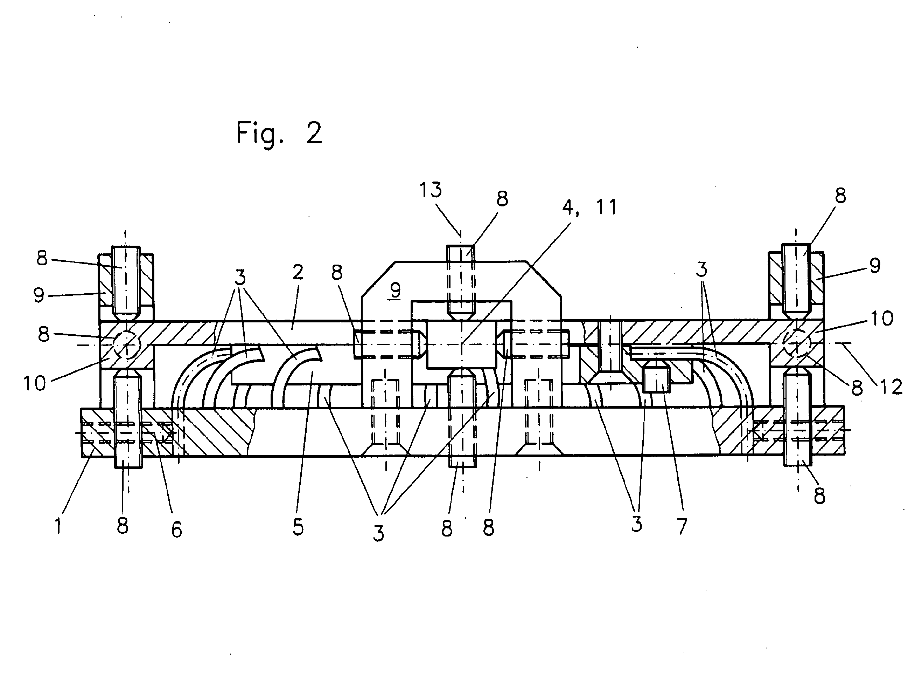

Die Federelemente werden im Ausführungsbeispiel durch Madenschrauben 6 und Schrauben 7 (vgl. Fig. 2) im Basiselement 1 und in der Adapterplatte 5 fixiert.

Soll die Justierplattform für größere Verstellungen insbesondere in X- und Y-Richtung oder auch Schwenkungen um eine orthogonal zu dem Verstelltisch ausgerichtete Drehachse eingesetzt werden, müssen die Federelemente und die Fixierungen dieser zur Vermeidung größerer innerer Torsionsbelastungen in den Federelementen entsprechend auszulegen, beispielsweise über nachgiebige Einspannung der Federelemente beispielsweise über Elastomerkomponenten oder, in Einzelfällen, auch über einen Verzicht der vorgenannten Fixierung durch Schrauben. nicht Dabei muss sichergestellt sein, dass kein merklicher Übergang zwischen Haft- und Gleitreibung stattfindet, welcher sich auch durch große Ver- und Rückstellkräfte relativiert.

Ferner umfasst die Justierplattform mehrere Justierschrauben 8 (Kugeldruckschrauben) als Verstellelemente. 12 dieser Justierschrauben sind in vier auf dem Basiselement fixierten, jeweils im 90°-Winkel zueinander um den Verstelltisch angeordneten Lagerböcken 9 eingesetzt und wirken auf je eine gegenüberliegende Fläche auf vier Vorsprüngen 10 des Verstelltisches 3. Optional können auch vier weitere Justierschrauben im Basiselement vorgesehen werden, welche von dem Basiselement aus in Z-Richtung auf die vier Vorsprünge einwirken (vgl. Figuren). Eine besondere Gestaltung dieser Flächen, nämlich durch eine geschmierte, geschliffene und gehärtete Oberfläche (oder andere bekannte Maßnahmen), reduziert Reibung und verhindert insbesondere den Übergang zwischen Haft-Gleitreibung. Die Justierung des Verstelltisches in den sechs Freiheitsgraden erfolgt in der vorgenannten Weise.

Die Federelemente bestehen im Ausführungsbeispiel aus Federdraht und weisen folglich ein hohes elastisches Spannungsniveau auf, dessen Höhe durch den Grad einer plastischen Vorverformung einstellbar ist. Dieses hohe Spannungsniveau sichert eine Beibehaltung einer vorgenommenen Justierung auch dann noch, wenn an den Verstelltisch Kräfte angreifen.

Eine Anwendung dieser Ausführungsform wurde im Rahmen einer Vermessung von Geschwindigkeitsprofilen in Mikrokanälen beispielsweise eines Mikrowärmetauschers mit Hilfe eines optischen Messverfahrens, dem Image-Velocimeter-Systems (PIV, schichtweises optisches Erfassen ebener Strömungsverhältnisse in einem Kanal mit seitlichem Fensterbereich mit anschließendem Zusammensetzen der Strömungsdaten zu einem dreidimensionalen Profil) entwickelt und eingesetzt. Die Mikrokanäle, deren Querschnitte im Bereich von 100 µm und darunter liegen, sind auf dem Verstelltisch fixiert und werden bei dieser Untersuchung mit Flüssigkeiten durchströmt. Die Fließgeschwindigkeiten betragen dabei bis zu 15 m/s. Für die Vermessung von dreidimensionalen Geschwindigkeitsfeldern wird das PIV-System exakt auf die parallel zu der X-, Y- und Z-Verfahrrichtung ausgerichteten Kanäle, welche in ihrer vollen Länge durch eine transparente Abdeckung optisch erfassbar sind, über ein Verfahren in Z-Richtung fokussiert.

### Bezugszeichenliste

- 1: Basiselement
- 2: Verstelltisch
- 3: Federelement
- 4: Symmetriepunkt
- 5: Adapterplatte
- 6: Madenschraube im Basiselement
- 7: Schraube in der Adapterplatte
- 8: Justierschraube
- 9: Lagerbock
- 10: Vorsprung
- 11: X-Achse
- 12: Y-Achse
- 13: Z-Achse

## Patentansprüche

1. Justageplattform mit einem in um drei Achsen (11, 12, 13) schwenkbaren und in drei Richtungen verschiebbaren Verstelltisch (2), umfassend
a) ein Basiselement (1),
b) Federelemente (3), die zwischen Verstelltisch und Basiselement kreisförmig um einen Symmetriepunkt (4) angeordnet und zu diesem gleich ausgerichtet sind, wobei die Federelemente in allen Richtungen eine elastische Nachgiebigkeit aufwiesen sowie
c) Verstellvorrichtungen (8), die vom Basiselement aus mechanisch auf den Verstelltisch einwirken
**dadurch gekennzeichnet, dass**.
d) die Federelemente (3) durch sternförmig um den Symmetriepunkt angeordnete gebogene Rundstäbe aus einem elastischen Material gebildet sind.

2. Justageplattform nach Anspruch 1, wobei die Federelemente (3) gegeneinander vorgespannt sind.

3. Justagesplattform nach Anspruch 1 oder 2, wobei die drei Achsen ortsfest auf dem Verstelltisch angeordnet durch den Symmetriepunkt verlaufen, diese als X-, Y-, und Z-Achsen (11, 12 bzw. 13) in die drei Richtungen weisen und die Verstellvorrichtungen an Krafteinleitungspunkten auf der X- und auf der Y-Achse (11 bzw. 12) einwirken.

4. Justageplattform nach Anspruch 3, wobei die Verstellvorrichtungen (8) jeweils unidirektional und parallel zu den drei Achsen (11, 12, 13) auf die Krafteinleitungspunkte wirken.

5. Justageplattform nach Anspruch 3 oder 4, wobei die Krafteinleitungspunkte auf den Achsen punktsymmetrisch zum Symmetriepunkt (4) angeordnet sind.

6. Justiervorrichtungen nach einem der Ansprüche 3 bis 5, wobei der Verstelltisch vier Vorsprünge (10) um die X- und Y-Achse mit Krafteinleitungsflächen für die Verstellvorrichtungen im Bereich der Krafteinleitungspunkte aufweist.

7. Justiervorrichtung nach einem der Ansprüche 3 bis 6, wobei zwölf Verstellvorrichtungen vorgesehen sind, wobei je vier von acht Verstellvorrichtungen parallel zu der X- bzw. Y-Achse paarweise gegeneinander auf die Krafteinleitungspunkte auf der Y- bzw. X-Achse sowie die verbleibenden vier Verstellvorrichtungen einseitig in Z-Richtung auf die vier Krafteinleitungspunkte gegen die Federelemente als Gegenkraft wirken.

8. Justiervorrichtung nach Anspruch 7, wobei vier weitere Verstellvorrichtungen vorgesehen sind, welche den verbleibenden vier Verstellvorrichtungen in Z-Richtung entgegenwirken.

9. Justierplattform nach einem der vorangegangenen Ansprüche, wobei die drei Achsen (11, 12, 13) orthogonal zueinander angeordnet sind.

## Claims

1. Adjustable platform, having an adjustment table (2) which is pivotable about three axes (11, 12, 13) and is displaceable in three directions, said platform including
a) a base unit (1),
b) spring units (3), which are disposed between the adjustment table and base unit in a circular manner around a symmetry point (4) and are aligned identically relative to said symmetry point, the spring units having a resilient flexibility in all directions, and
c) adjustment devices (8), which act mechanically upon the adjustment table from the base unit,
**characterised in that**
d) the spring units (3) are formed by curved rods, which are disposed radially about the symmetry point and are made of a resilient material.

2. Adjustable platform according to claim 1, wherein the spring units (3) are initially tensioned relative to one another.

3. Adjustable platform according to claim 1 or 2, wherein the three axes extend through the symmetry point in a fixed manner when disposed on the adjustment table, said axes point into the three directions as the X, Y and Z axes (11, 12 and 13 respectively), and the adjustment devices act upon the X and Y axes (11 and 12 respectively) at force-introducing points.

4. Adjustable platform according to claim 3, wherein the adjustment devices (8) act respectively upon the force-introducing points unidirectionally and parallel to the three axes (11,12,13).

5. Adjustable platform according to claim 3 or 4, wherein the force-introducing points are disposed on the axes in a point-symmetrical manner relative to the symmetry point (4).

6. Adjusting devices according to one of claims 3 to 5, wherein the adjustment table has four projections (10) around the X and Y axes with force-introducing areas for the adjustment devices in the region of the force-introducing points.

7. Adjusting device according to one of claims 3 to 6, wherein twelve adjustment devices are provided, every four of eight adjustment devices acting in pairs relative to one another, parallel to the X and Y axes respectively, upon the force-introducing points on the Y and X axes respectively, and the remaining four adjustment devices acting upon the four force-introducing points unilaterally in the Z direction as a counteracting force against the spring units.

8. Adjusting device according to claim 7, wherein four additional adjustment devices are provided, which counteract the remaining four adjustment devices in the Z direction.

9. Adjustable platform according to one of the preceding claims, wherein the three axes (11, 12, 13) are disposed orthogonally relative to one another.

## Revendications

1. Plateforme d'ajustage dotée d'une table de réglage (2) mobile dans trois directions et pivotable autour de trois axes (11, 12, 13) comprenant :
a) un élément de base (1),
b) des éléments élastiques (3) placés entre la table de réglage et l'élément de base et disposés en cercle autour d'un point de symétrie (4) en étant alignés de la même manière par rapport à celui-ci, sachant que les éléments élastiques présentent une souplesse élastique dans toutes les directions, ainsi que
c) des dispositifs de réglage (8) qui agissent mécaniquement sur la table de réglage depuis l'élément de base,
**caractérisée en ce que**
d) les éléments élastiques (3) sont formés par des barres rondes en matière élastique, pliées et disposées en étoile autour du point de symétrie.

2. Plateforme d'ajustage selon la revendication 1, dans laquelle les éléments élastiques (3) sont précontraints l'un contre l'autre.

3. Plateforme d'ajustage selon la revendication 1 ou 2, dans laquelle les trois axes traversent le point de symétrie en étant placés fixement sur la table de réglage, en allant dans les trois directions en tant qu'axes X, Y et Z (11, 12, 13), et les dispositifs de réglage agissent sur des points d'introduction de force situés sur les axes X et Y (11, 12) au niveau.

4. Plateforme d'ajustage selon la revendication 3, dans laquelle les dispositifs de réglage (8) agissent respectivement sur les points d'introduction de force de manière unidirectionnelle et parallèle aux trois axes (11, 12, 13).

5. Plateforme d'ajustage selon la revendication 3 ou 4, dans laquelle les points d'introduction de la force sont disposés sur les axes à symétrie ponctuelle par rapport au point de symétrie (4).

6. Plateforme d'ajustage selon l'une quelconque des revendications 3 à 5, dans lequel la table de réglage présente quatre saillies (10) autour des axes X et Y, ayant des surfaces d'introduction de force pour les dispositifs de réglage dans la zone des points d'introduction de force.

7. Plateforme d'ajustage selon l'une quelconque des revendications 3 à 6, dans laquelle on a prévu douze dispositifs de réglage, sachant que quatre dispositifs de réglage sur huit agissent respectivement parallèlement aux axes X ou Y par paire en opposition sur les points d'introduction de force sur l'axe Y ou X, et que les quatre dispositifs de réglage restant agissent quant à eux d'un seul côté en tant que force antagoniste dans la direction Z sur les quatre points d'introduction de force à l'encontre des éléments élastiques.

8. Plate-forme d'ajustage selon la revendication 7, dans laquelle quatre autres dispositifs de réglage agissent contre les quatre dispositifs de réglage restant dans la direction Z.

9. Plateforme d'ajustage selon l'une quelconque des revendications précédentes, dans laquelle les trois axes (11, 12, 13) sont placés de manière orthogonale les uns par rapport aux autres.
